# EUROPEAN PATENT SPECIFICATION

(11) **EP 1 849 597 B1**
(45) Date of publication and mention of the grant of the patent: **31.12.2008**
(21) Application number: 06425280.2
(22) Date of filing: 26.04.2006
(51) Int. Cl.: B32B 27/32

(54) **A polyolefin film having antifog and anti-UV properties**
Polyolefinfolie mit Antibeschlag- und UV-Schutzeigenschaften
Feuille en polyoléfine ayant des propriétés antibuées et anti-UV.

(43) Date of publication of application: 31.10.2007
(73) Proprietor: VIBAC S.p.A., I-15040 Ticineto (Alessandria) (IT)
(72) Inventor: Guida, Filippo, I-67100 L'Aquila (IT); Campanella, Vincenzo, I-67100 L'Aquila (IT); Mazzaferro, Stefano, I-67100 L'Aquila (IT)
(74) Representative: Gerbino, Angelo

(56) References cited:
- EP-A- 1 457 315
- WO-A-03/099911

## Description

The present invention relates to a biaxially oriented and substantially transparent, multilayered, polyolefin film.

Films of this type are used widely in the production of packages for holding foods that are moist and/or have some water content, particularly fruit and vegetables. In order to be entirely suitable for this use, the films have to have anti-misting properties - commonly defined by the term "antifog" properties - that is to say they must prevent the formation of an opaque layer obstructing the view of the interior of the package as a result of the condensation of water droplets on their inner surfaces.

It should also be borne in mind that these packages are usually displayed at points of sale in chilled display units which are generally illuminated by neon and/or incandescent lamps or in any case by artificial light which has a component of ultra-violet (UV) radiation in addition to the visible and infra-red spectrum component. Owing to its high energy content, UV radiation acts as a photo-initiator of reactions between organic substances in general and oxygen, thus acting as a catalyst of those reactions. In particular, for organic substances of vegetable origin, the reactions with oxygen are of various kinds and lead to the formation of various undesired products. These reactions range from the oxidation of vitamins to alteration of the colours of pigments, etc., which lead to degradation of the overall quality of the food in quite short periods of time. It is therefore desirable for films that are used for the production of such packages to be capable of considerably reducing or even blocking the transmission of UV radiation.

Document US-5 391 609 describes a generic transparent film which has barrier properties with respect to UV radiation by virtue of the incorporation of nanoparticulate titanium dioxide, that is to say titanium dioxide in the form of particles having dimensions, for example, of between 10 and 50 nm. However, the titanium dioxide particles tend to agglomerate, compromising the overall optical properties of the film.

This disadvantage is overcome by the solution described in document WO-03 099 911, according to which nanoparticulate titanium dioxide particles are covered with a coating which prevents their agglomeration and hence the negative effects resulting therefrom. However, WO-03 099 911 identifies a minimum titanium dioxide concentration of 0.4% relative to the total weight of the film, below which concentration a significant reduction in UV radiation transmission is not achieved. Moreover, this document does not mention any antifog properties of the film.

The object of the present invention is therefore to provide a polyolefin film suitable for the production of packages for holding foods that are moist and/or have some water content which has in particular both good antifog properties and good UV-absorption properties.

This object is achieved by means of a biaxially oriented, multi-layered, polyolefin film comprising titanium dioxide in quantities of between 0.20 and 0.48% - preferably in quantities greater than 0.20 and less than 0.45%, or even less than 0.40% - relative to the total weight of the film, and at least one antifog additive in a quantity of between 0.2 and 1.2% relative to the total weight of the film, the titanium dioxide being present in the form of particles with average dimensions of between 10 and 50 nm and being covered with a coating which opposes their agglomeration.

In particular, although the film of the present invention has a markedly low concentration of nanoparticulate titanium dioxide, surprisingly, it enables a residual UV radiation transmission (particularly in the spectral region of wavelength 270-310 nm) of less than 10% to be achieved.

The coating of the titanium dioxide particles is applied in conventional manner and may be of an organic nature, for example, fatty acids or salts thereof, optionally combined with inorganic components such as, for example, alumina.

The antifog additives are, in general, compounds having a non-polar portion which can bind to the polyolefin matrix and a polar portion which can interact with aqueous systems. The type of antifog additive used within the scope of the present invention is not critical, however, and it may be selected from any of the known additives and combinations thereof, for example, esters of glycerol and fatty acids and/or ethoxylated aliphatic amines.

The film of the present invention is preferably composed of four layers - that is to say, a first covering layer, a first intermediate layer, a base layer and a second covering layer, arranged in sequence - or by five layers, in which case a second intermediate layer is interposed between the base layer and the second covering layer.

The base layer is preferably constituted by polypropylene homopolymer or a mixture of polypropylene polymers to which two masterbatches are added, that is: a first, antifog masterbatch at a concentration variable from 1 to 10%, preferably between 3 and 7% relative to the weight of the base layer and a second, anti-UV masterbatch at a maximum concentration of 6% of the weight of the base layer. The polypropylene polymers used in the base layer have a melt flow index that is advantageously between 1 and 5 g/10 min. at 230°C and a melting point above 140°C, preferably between 150°C and 170°C.

The antifog masterbatch used is constituted by one or more antifog additives which are dispersed in a polypropylene-based polymer matrix and are present in quantities, for example, of between 1 and 15% by weight.

The anti-UV masterbatch comprises titanium dioxide in the form of coated particles having dimensions of between 10 and 50 nm, preferably with a maximum content of 10%.

The thickness of the base layer is advantageously between 60 and 80% of the total thickness of the film.

The first intermediate layer (that is to say that which will be disposed further towards the inside of the package for the production of which the film is used) is preferably constituted by polypropylene homopolymer or a mixture of polypropylene homopolymers with a melt flow index of between 1 and 7 g/ 10 min. at 230°C and a melting point above 140°C, preferably between 150°C and 170°C. Alternatively, the first intermediate layer may be constituted by ethylene-propylene copolymer or ethylene-propylene-butylene terpolymer with a melt flow index of between 3 and 7 g/10 min. at 230°C. The thickness of the first intermediate layer is advantageously between 1 and 5 µm, in particular between 1.5 and 3 µm.

The first and second covering layers are both preferably constituted by ethylene-polypropylene copolymer or ethylene-polypropylene-butylene terpolymer with a melt flow index of between 2 and 10 g/10 min. at 230°C and a melting point above 120°C, preferably between 130°C and 140°C, and have compositions that are differentiated relative to one another.

The first covering layer (that is to say that which will be on the inside of the package for the production of which the film is used) may have the following composition: ethylene-propylene copolymer and ethylene-propylene-butylene terpolymer with a melt flow index of between 3 and 7 g/10 min. at 230°C and a melting point above 120°C preferably between 130°C and 140°C, supplemented with a masterbatch of antifog additive in a proportion variable between 10 and 40%, preferably between 15 and 30% relative to the weight of the layer and an anti-clogging masterbatch containing a non-migrating, polymer-type active ingredient of the alkyl methacrylates family, in a proportion variable between 0.5 and 5% and preferably between 1 and 3% relative to the weight of the layer. The first covering layer is advantageously subjected to an electrical discharge treatment known as corona treatment during the film manufacturing process so as to have a surface tension value no less than 44 mN/m and preferably between 44 and 48 mN/m. The thickness of the layer is advantageously between 1.5 and 7 µm, in particular between 2 and 4 µm.

The second covering layer (that is to say that which will be on the outside of the package for the production of which the film is used) may have the following composition: ethylene-propylene copolymer or ethylene-propylene-butylene terpolymer with a melt flow index of between 3 and 7 g/10 min. at 230°C and a melting point above 120°C, preferably between 130°C and 140°C, supplemented with a quantity variable between 0.5 and 5%, preferably between 1 and 3%, relative to the weight of the layer, of an anti-clogging masterbatch containing a non-migrating, polymer-type active ingredient of the alkyl methacrylates family. The thickness of the layer is advantageously between 0.4 and 3 µm, in particular between 1 and 1.5 µm. The second covering layer too is subjected to corona treatment during the film manufacturing process so as to have a surface tension value no greater than 40 mN/m and preferably between 38 and 40 mN/m. A difference in surface tension of at least 4 mN/m and preferably of 6 mN/m is thus created between the two covering layers without penalizing the weldability of the film.

The second intermediate layer (that is to say that which will be further towards the outside of the package for the production of which the film is used) may have the following composition: polypropylene homopolymer or a mixture of polypropylene homopolymers with a melt flow index of between 1 and 7 g/10 min. at 230°C and a melting point above 140°C, preferably between 150°C and 170°C. The thickness of the layer is advantageously between 1 and 7 µm, in particular between 2 and 4 µm.

The film of the present invention may be produced by an extrusion and bi-axial orientation process the general characteristics of which are known and conventional. A process of this type provides for the film to be produced by melting of the materials constituting the individual layers. The molten masses are then passed through separate channels inside a multilayer extrusion head in which the various channels are combined into a unitary flow which is urged out of the extrusion device through the slot of a die. The base layer is preferably produced by a co-rotating, twin-screw extruder in order to achieve greater homogeneity of the components introduced than that which can be achieved with a single-screw extruder. The same applies to the intermediate layer/s which is/are produced with the use of two different co-rotating, twin-screw extruders.

The extruded film is then caused to set and oriented first of all longitudinally by means of drawing rollers and then transversely by a diverging chain in a conventional "tenter" structure. The film thus oriented is preferably subjected to corona treatment to impart the desired differentiated surface tension to its two faces and is finally wound on a reel.

Further advantages and characteristics of the present invention will become clear from the following non-limiting film-composition example in which all of the percentages should be considered as percentages by weight unless indicated otherwise.

### Example

A film with five layers was produced by an extrusion and biaxial orientation process and had the following structure:
- a second covering layer with a thickness of 1.5 µm and the following composition: 98% ethylene-propylene copolymer and 2% anti-clogging masterbatch containing 5% of A. Schulman Plastics' POLYBATCH ABVT 22 SC non-migrating, polymer-type active ingredient of the alkyl methacrylates family;
- a second intermediate layer with a thickness of 3 µm and the following composition: 100% polypropylene homopolymer;
- a base layer with a thickness of 20 µm and the following composition: 88% polypropylene homopolymer, 6% of masterbatch containing 10% of Ampacet's Anfog 400685 antifog additive and 6% of masterbatch containing 10% of Ampacet's UVBLOCK 10 titanium dioxide with nanoparticulate dimensions;
- a first intermediate layer with a thickness of 2.5 µm and the following composition: 100% polypropylene homopolymer, and
- a first covering layer with a thickness of 3 µm and the following composition: 68% ethylene-propylene copolymer, 2% of anti-clogging masterbatch containing 5% of A. Schulman Plastics' POLYBATCH ABVT 22 SC non-migrating, polymer-type active ingredient of the alkyl methacrylates family and 30% of masterbatch containing 10% of Ampacet's Anfog 400685 antifog additive.

The film as a whole contained a quantity of 0.4% of titanium dioxide and a quantity of 0.7% of antifog additives, relative to the total weight. The surface tensions of the faces of the film that formed parts of the first and second covering layers were 46 and 40 mN/m, respectively. These surface tensions were advantageously brought about by corona treatment.

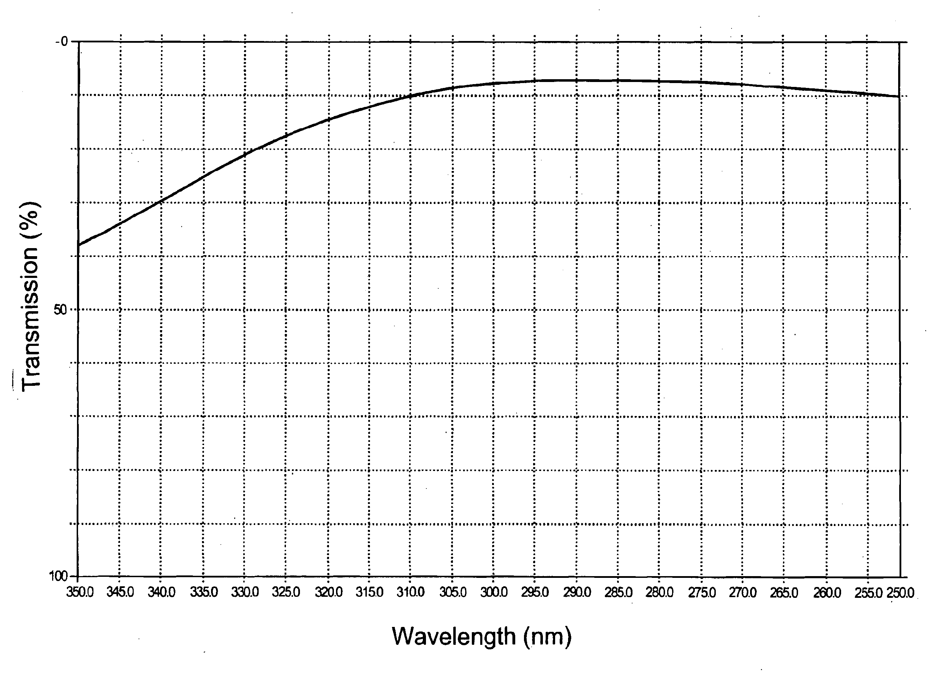

The film was subjected to determination of the percentage of UV radiation transmission with the use of a UV-Visible spectrometer. The sole drawing shows the shape of the curve of transmission as a function of wavelength.

Naturally, the principle of the invention remaining the same, the details of construction and forms of embodiment may be varied with respect to those described purely by way of example, without thereby departing from its scope.

## Claims

1. A multilayered, biaxially oriented, polyolefin film comprising titanium dioxide in a quantity of between 0.20 and 0.48% relative to the total weight of the film and at least one antifog additive in a quantity of between 0.2 and 1.2% relative to the total weight of the film, the titanium dioxide being present in the form of particles with an average dimension of between 10 and 50 nm and being covered with a coating which opposes their agglomeration, said film comprising, in sequence, a first covering layer, a first intermediate layer, a base layer and a second covering layer, the titanium dioxide particles being contained in the base layer, and the at least one antifog additive being contained in the base layer and in the first covering layer.

2. A film according to Claim I comprising titanium dioxide in a quantity greater than 0.20 and less than 0.45% relative to the total weight of the film.

3. A film according to Claim 1 or 2 further comprising a second intermediate layer interposed between the base layer and the second covering layer.

4. A film according to any one of the preceding claims, in which the face which forms part of the first covering layer has a surface tension which is greater by at least 4 mN/m than that of the face which forms part of the second covering layer.

5. A film according to any one of the preceding claims, in which the thickness of the base layer is between 60 and 80% of the total thickness of the film.

6. A film according to any one of the preceding Claims in which the base layer comprises at least 72% by weight of polypropylene.

7. A film according to any one of the preceding Claims in which the at least one antifog additive is selected from the group consisting of esters of glycerol and fatty acids, ethoxylated aliphatic amines, and mixtures thereof

## Patentansprüche

1. Mehrschichtige, biaxial gereckte Polyolefinfolie, umfassend Titandioxid in einer Menge zwischen 0,20 und 0,48%, bezogen auf das Gesamtgewicht der Folie, und mindestens einen Antibeschlagzusatz in einer Menge zwischen 0,2 und 1,2%, bezogen auf das Gesamtgewicht der Folie, wobei das Titandioxid in Form von Partikeln mit einer durchschnittlichen Abmessung zwischen 10 und 50 nm vorhanden ist, die mit einer Beschichtung bedeckt sind, welche deren Agglomeration entgegenwirkt, wobei die Folie der Reihe nach eine erste Deckschicht, eine erste Zwischenschicht, eine Grundschicht und eine zweite Deckschicht umfasst, wobei die Titandioxidpartikel in der Grundschicht enthalten sind und der mindestens eine Antibeschlagzusatz in der Grundschicht und in der ersten Deckschicht enthalten ist.

2. Folie gemäß Anspruch 1, umfassend Titandioxid in einer Menge von mehr als 0,20 und weniger als 0,45%, bezogen auf das Gesamtgewicht der Folie.

3. Folie gemäß Anspruch 1 oder 2, welche weiters eine zweite Zwischenschicht umfasst, die zwischen der Grundschicht und der zweiten Deckschicht eingefügt ist.

4. Folie gemäß einem der vorhergehenden Ansprüche, wobei die Stirnfläche, die einen Teil der ersten Deckschicht bildet, eine Oberflächenspannung aufweist, die um mindestens 4 mN/m größer ist als jene der Stirnfläche, die einen Teil der zweiten Deckschicht bildet.

5. Folie gemäß einem der vorhergehenden Ansprüche, wobei die Dicke der Grundschicht zwischen 60 und 80% der Gesamtdicke der Folie beträgt.

6. Folie gemäß einem der vorhergehenden Ansprüche, wobei die Grundschicht mindestens 72 Gew.% Polypropylen umfasst.

7. Folie gemäß einem der vorhergehenden Ansprüche, wobei der mindestens eine Antibeschlagzusatz ausgewählt ist aus der Gruppe, bestehend aus Estern von Glycerin und Fettsäuren, ethoxylierten aliphatischen Aminen und Mischungen davon.

## Revendications

1. Film de polyoléfine multicouche, orienté de façon bi-axiale, comprenant du dioxyde de titane en une quantité comprise entre 0,20 et 0,48 % par rapport au poids total du film et au moins un additif antibuée en une quantité comprise entre 0,2 et 1,2 % par rapport au poids total du film, le dioxyde de titane étant présent sous la forme de particules ayant une dimension moyenne comprise entre 10 et 50 nm et couvertes d'un revêtement qui empêche leur agglomération, ledit film comprenant, en séquence, une première couche couvrante, une première couche intermédiaire, une couche de base et une seconde couche couvrante, les particules de dioxyde de titane étant contenues dans la couche de base, et le au moins un additif antibuée étant contenu dans la couche de base et dans la première couche couvrante.

2. Film selon la revendication 1, comprenant du dioxyde de titane en une quantité supérieure à 0,20 et inférieure à 0,45 % par rapport au poids total du film.

3. Film selon la revendication 1 ou 2, comprenant en outre une seconde couche intermédiaire interposée entre la couche de base et la seconde couche couvrante.

4. Film selon l'une quelconque des revendications précédentes, dans lequel la face qui forme une partie de la première couche couvrante a une tension de surface qui est supérieure d'au moins 4 mN/m à celle de la face qui forme une partie de la seconde couche couvrante.

5. Film selon l'une quelconque des revendications précédentes, dans lequel l'épaisseur de la couche de base est comprise entre 60 et 80 % de l'épaisseur totale du film.

6. Film selon l'une quelconque des revendications précédentes, dans lequel la couche de base comprend au moins 72 % en poids de polypropylène.

7. Film selon l'une quelconque des revendications précédentes, dans lequel au moins un additif antibuée est choisi parmi le groupe constitué par les esters de glycérol et d'acides gras, les amines aliphatiques éthoxylées et les mélanges de ceux-ci.
